# EUROPEAN PATENT SPECIFICATION

(11) **EP 1 091 220 B1**
(45) Date of publication and mention of the grant of the patent: **10.12.2008**
(21) Application number: 00114753.7
(22) Date of filing: 10.07.2000
(51) Int. Cl.: G02B 6/293, G02B 6/12

(54) **Broadening of arrayed waveguide grating passband response**
Verbreiterung der Brandbreite eines Wellenleitergitters
Elargissement de la réponse en bande passante de réseaux de guides d'onde

(30) Priority: 02.09.1999 EP 99810786
(43) Date of publication of application: 11.04.2001
(73) Proprietor: International Business Machines Corporation, Armonk, NY 10504 (US)
(72) Inventor: Bona, Gian Luca, 8908 Hedingen (CH); Horst, Folkert, 8802 Kilchberg (CH); Offrein, Bert Jan, 8135 Langnau am Albis (CH)
(74) Representative: Klett, Peter Michael

(56) References cited:
- EP-A- 0 482 461
- EP-A- 0 702 253
- EP-A- 0 881 512
- US-A- 5 706 377
- US-A- 5 748 811
- L. B. SOLDANO, E. C. M. PENNINGS: "Optical Multi-Mode Interference Devices Based on Self-Imaging: Principles and Applications" JOURNAL OF LIGHTWAVE TECHNOLOGY, vol. 13, no. 4, April 1995 (1995-04), pages 615-627, XP000513578 new york

## Description

### 1. BACKGROUND OF THE INVENTION

### 1.1 FIELD OF THE INVENTION

The present invention relates to optical networks. In particular it relates to method and apparatuses for improving optical networking properties by broadening the passband response of network components comprising arrayed waveguide gratings.

### 1.2. DESCRIPTION AND DISADVANTAGES OF PRIOR ART

Loss reduction in optical networks is of major concern because it reduces the need for optical signal amplification. A flattened passband of any network component is a general aim of optical network traffic as it reduces the strict requirements on wavelength control and allows cascadability of components without affecting optical transmission properties. Therefore both, low losses and flat passbands are important factors to reduce cost in optical networks.

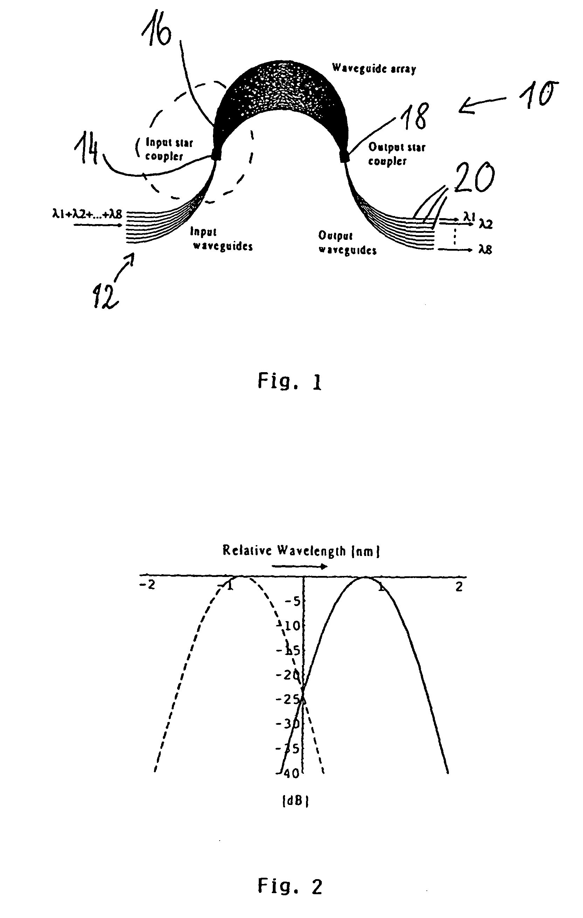

In **fig. 1** an Arrayed Waveguide Grating, further referred to herein as AWG is drawn schematically. This component can be used to separate a set of wavelengths impinging on a single input waveguide port. Each wavelength is transferred to a separate output waveguide. Reversibly, the AWG can take a number of wavelengths, entered at respective input ports and combine them all on one output port. The component can thus be used as a wavelength demultiplexer and as a multiplexer.

**Fig. 2** shows an example of the calculated transfer function of an AWG as disclosed in Smit, M:K., van Dam,C., "PHASAR-Based WDM-Devices: Principles, Design and Applications", IEEE Journal of Selected Topics in Quantum Electronics, vol.2, pp.236-250, 1996' from an input channel to two adjacent output channels with a wavelength separation of 1.6 nm. The shown transfer function is generally obtained for a prior art AWG, improved for a channel to channel crosstalk smaller than -40 dB. For this standard transfer function, the -1 dB bandwidth of a channel is approximately 30% of the channel spacing.

To reduce the sensitivity of a communications system for wavelength drifts either in transmitter lasers or in an AWG, it would be advantageous as a general aim of the present invention to increase the width of the -1 dB passband relative to the channel spacing, i.e., to flatten the transmission function.

For broadening said passbands in prior art, amongst others, multimode receiver waveguides at the output of the AWG are used. This method, however, only works when the AWG is used as demultiplexer, immediately followed by the detector diodes.

EP 0 881 512 A2 discloses a signal router with a free space region and input and output sides. A number of input and output waveguide arms extend from the respective input and output sides of the free space region. At least a subset of the input or output waveguide arms are configured such that a signal applied to one of the waveguide arms excites multiple modes of that waveguide arm. Coupling between the multiple modes of the various waveguide arms is used to shape a multi-channel output radiation pattern of the router. The excitation of multiple modes may be provided by configuring a given waveguide arm to include a first portion and a second portion, with the second portion arranged between the first portion and a side of the free space region and having a width which is greater than a width of the first portion. Alternatively, the excitation of multiple modes may be provided by including one or more auxiliary waveguide arms between a given pair of main input or output waveguide arms. In either case, a desired multi-channel radiation pattern for a given router may be provided by altering characteristics of the waveguide arms.

EP 0 702 253 A2 provides an optical apparatus that includes a first arrayed waveguide or Mach-Zehnder frequency routing device having at least one input port and P output ports, where P >= 2. A second frequency routing device is also provided that has P input ports and at least one output port. P optical paths couple the input port of the first frequency routing device to the output port of the second frequency routing device. To obtain a wide and flat passband the two frequency routers are combined in a way to compensate the respective wavelength shifts for each optical path. The transmission coefficients for the optical paths; between the routers equal to unity at distinct optical wavelengths and equal to half unity halfway between these distinct wavelengths.

US 5,748,811 discloses an optical filter, such as a wavelength-division multiplexer, demultiplexer, or optical router, in which several single-mode waveguides are coupled to the sides of an optical interaction region containing a wavelength dispersive element that collects light from one or more input waveguides inputting light to the interaction region and disperses it according to wavelength to one or more output waveguides outputting wavelength-separated light. According to the invention, a multi-moded

### 1.3. OBJECTS OF THE PRESENT INVENTION

Therefore, an object of the present invention is to provide an improved method and apparatus for a broadening the passband of optical network components having one or more Arrayed Waveguide Gratings.

### 2. SUMMARY AND ADVANTAGES OF THE INVENTION

These objects of the invention are achieved by the features stated in enclosed independent claims. Further advantageous arrangements and embodiments of the invention are set forth in the respective subclaims.

According to a first aspect the present invention discloses a method for improving the passband of an optical network device -or apparatus- which includes an arrayed waveguide grating. The essential feature is the step of generating a controllable and thus somehow 'dynamic' intensity field profile with a controllable beating pattern in a multimode superposition of different modes - as e.g., a fundamental mode and a first mode, or higher mode, respectively or a superposition of higher modes only - of an input wavelength entering the input site of said apparatus, whereby said beating pattern is controlled in a fixed, predetermined way for improving the mode overlap in a receiver waveguide associated with an output side of said apparatus in order to achieve a wavelength-dependent coupling performance when coupling said multimode superposition into said receiver waveguide. For simplicity, throughout the following description it is referred to only exemplarily to the TE0 mode as the fundamental mode and to the TE1 mode as a higher order mode.

This is achieved for example in a multiplexer component by a symmetrical arrangement of multiple converter units at both, the input section of the input star coupler and the output section of the output star coupler of the multiplexer. Thus, in an 8:1 multiplexer, only 8 input converter units and one output converter unit are required.

As an advantage, it is possible to increase the -1 dB passband width to channel spacing ratio from 30% to approximately 60% with a negligible loss penalty, i.e., less than 0.4 dB compared to the AWG cited above. The method is applicable to optical network apparatuses as both, multiplexers and demultiplexers, and for M x N coupler connecting M input lines to N output lines.

In a prior art AWG the field of a transmitter waveguide is imaged by the waveguide array onto the output side of the second star coupler. With changing wavelength, the position of the image shifts along the star coupler output, from one output waveguide to the next, etc..

The control of said beating pattern advantageously comprises the steps of generating said intensity field profile at the transmitter and receiver waveguides such that for a wavelength range around the AWG channel wavelengths the spatial shift in the position of the peak of the dynamic field profile counterbalances the wavelength dependent shift of the image of the field of the transmitter waveguide. This makes that the coupling from transmitter to receiver waveguide stays high over this wavelength range resulting in a flattened passband. Due to the periodicity of the dynamic field profile, the counterbalancing effect, and thus the passband -flattening, can be made to re-occur for all channel wavelengths.

Advantageously, said step of generating a dynamic field profile is achieved by a superposition of a fundamental mode and a higher order mode, as e.g., TE0 mode and a TE1 mode in a bimodal transmitter waveguide in the input section of an AWG according to the present invention, and said periodic movement is generated by imposing a wavelength dependent phase shift of an integer multiple of 2 π for each wavelength change of the size of the channel spacing.

According to a second, preferred embodiment a further aspect of the present invention is disclosed. According to said second aspect said step of converting monomode light of each of said input waveguides of said AWG comprising apparatus into a respective superposition of multiple modes comprises the step of making a power ratio between said fundamental mode and said higher order mode specific for each input wavelength. Here, a lower number of converter units is required. In a 8:1 multiplexer, for example, there is needed just one converter unit at its output. A 1:8 demultiplexer can be obtained by solely reversing the AWG apparatus. For purposes of generalization only it should be mentioned that it would also be possible to provide the demultiplexer apparatus with 8 converter units at its output and none of them at its input. This, however would be a waste of resources.

The key advantage of these improved AWG designs lies in the fact that they provide a method to obtain a flattened passband without the introduction of 3 dB extra loss, as opposed to other broadened passband designs.

### 3. BRIEF DESCRIPTION OF THE DRAWINGS

The present invention is illustrated by way of example and is not limited by the shape of the figures of the accompanying drawings in which:
- fig. 1: is a schematic drawing of prior art AWG arrangement used as a wavelength demultiplexer,
- fig. 2: is a drawing showing the transmission characteristic of the input of a prior art AWG to two different output channels,
- fig. 3: is a simplified schematic drawing showing the input section of an AWG arrangement improved according to the present invention in its first aspect as mentioned above,
- fig. 4a to 4e: show intensity versus lateral position of the field profile at the end of a multimode transmitter waveguide, for five different wavelengths, increasing from 4a with λ1 , 4b with λ1 + Δλ/4 to 4e, with λ2,
- fig. 5: is a schematic functional drawing showing the basic functions of a converter unit according to the first aspect of the present invention,
- fig. 6: shows intensity versus position of the field profile of the input waveguide imaged by the waveguide array onto the end of the output star coupler (straight line), compared to the field profiles of two output waveguides (dashed lines), for increasing input wavelengths as depicted in fig. 4,
- fig. 7: shows the image of the transmitter waveguide in the output star coupler (straight line) compared to the dynamic field profiles of two receiver waveguides (dashed lines) for increasing input wavelengths as depicted in fig. 4,
- fig. 8a, 8b: are drawings showing the input to output waveguide transfer functions for a prior art (8a) and an inventional AWG arrangement (8b),
- fig. 9: is a schematic functional drawing showing the basic functions of a converter unit according to the second, preferred aspect of the present invention,
- fig. 10a, 10b: are drawings showing the input to output waveguide transfer functions for an AWG arrangement according to the first aspect of the present invention having fixed power ratio converter units (10a) for variable power ratio converter units according to the second aspect of the present invention (10b).

### 4. DETAILED DESCRIPTION OF THE PREFERRED EMBODIMENTS

With general reference to the figures and with special reference now to a prior art AWG comprising demultiplexer 10 as depicted in **fig. 1** the monomode input waveguides 12 end directly in the input star coupler 14. From this star coupler an array 16 of waveguides with linearly increasing lengths leads to the output star coupler 18. The monomode output waveguides 20 depart directly from this output star coupler.

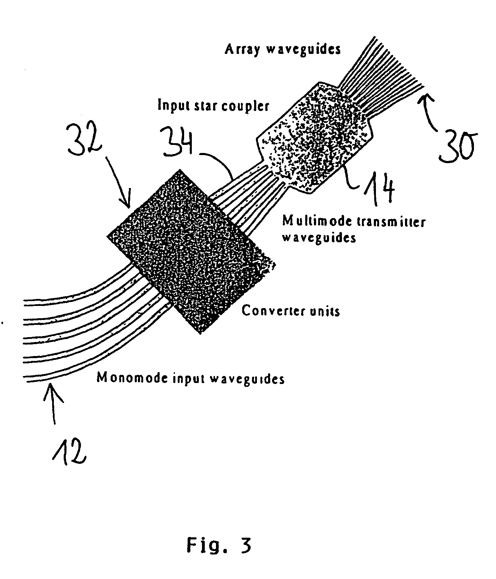

**Fig. 3** shows a simplified, schematic drawing of the input section of an AWG 30 which is improved according a first aspect of the present invention in which the light from the monomode input waveguides 12 is transformed in a plurality of inventional converter units 32 -one per input waveguide- into a superposition of multiple waveguide modes. The corresponding input section is enclosed by a broken line in fig. 1 for comparison.

These multiple waveguide modes are transferred separately to the input star coupler 14 by some multimode transmitter waveguides 34. At the output star coupler -not depicted in the drawing- this situation is mirrored: The light is first coupled into multimode receiver waveguides and then transferred to the monomode output waveguides by converter units of the same type as mentioned above.

The wavelength-dependent beating pattern of the multiple waveguide modes generates a controllable and thus somehow 'dynamic' field profile at the input of the input star coupler 14.

According to the invention it is disclosed down below, how a suitably engineered dynamic field profile can be used to broaden the passband of the AWG arrangement improved as described above to 60% of the channel spacing.

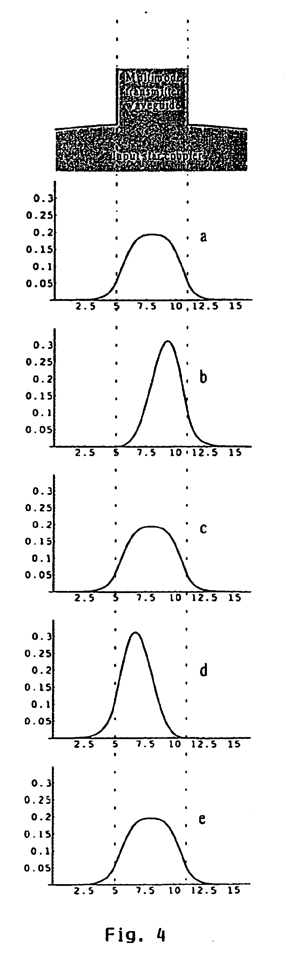

With reference to **fig. 4** the dynamic field profile at the output of the multimode transmitter waveguide 34 should be constructed in such a way that for light with a wavelength conforming to the AWG channel wavelengths, the field is centered at the waveguide centers (see fig. 4a and 4e). However, when the wavelength of the light is slightly longer than the first channel wavelength, the field maximum should move to the right side of the waveguide center (fig. 4b), then return to the center for the wavelength just between the channel wavelengths (fig. 4c) , then move to the other side of the waveguide center (fig. 4d) and finally return to the center when the wavelength of the light equals the second channel wavelength (fig. 4e). Right sides and left sides can naturally be reversed, too.

The dynamic field profile as shown in fig. 4 has been generated by the superposition of a TE0 and a TE1 mode with a fixed power ratio of 0.8 / 0.2 in a bimodal waveguide 34. The periodic movement is generated by imposing a wavelength dependent phase shift of 2B for each wavelength change of the size of a channel spacing.

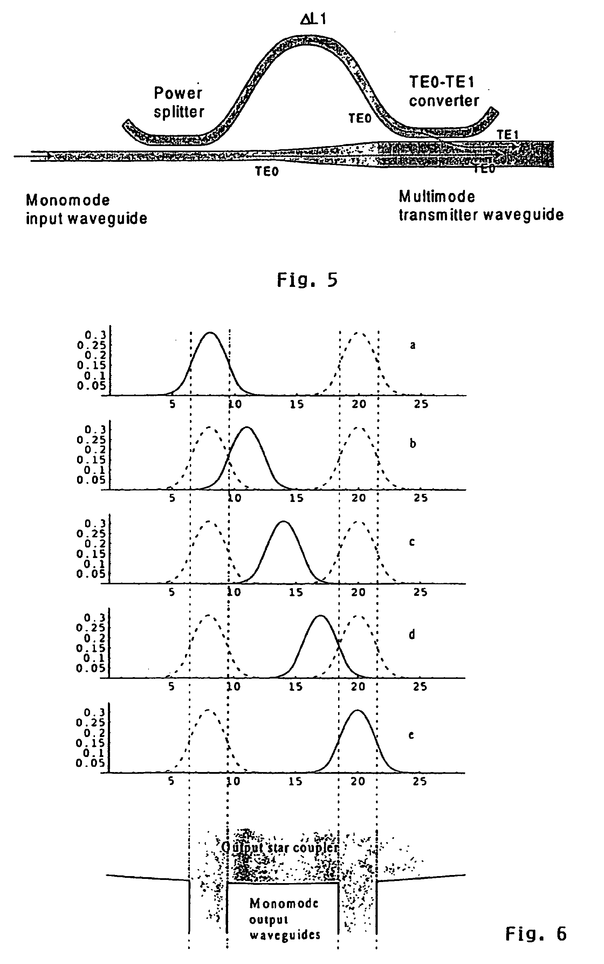

An example of a converter unit 32 which can generate this field profile is shown schematically in **fig. 5**. It comprises a power splitter which splits off 20% of the power into the upper branch. The remaining 80% in the lower branch is converted to the TE0 mode of the multimode waveguide by a conventional taper. The power in the upper branch is coupled to the TE1 mode of the multimode waveguide 34 by the mode converter. The beating period (e.g. λ8 = 1,6 nm) of the mode superposition in the multimode transmitter waveguide 34 is determined by the length difference ΔL1 between the upper and lower branches.

The power splitter and mode converter are prior art optical apparatuses which need not to be explained in more detail as a person skilled in the art knows their structure and way of operation. Said apparatuses in this example are implemented using directional couplers. However, other implementations using e.g., Y- splitters or multimode interferometers (MMIs) are also possible.

For a better understanding of the inventional basic concepts and with reference to **fig. 6** a more detailed description is given next below on the broadening of passband phenomenon using controllable 'dynamic' field profiles.

In a prior art standard AWG the waveguide array projects an image of the field profile of the input waveguide at the output side of the output star coupler. This image is thus formed in the plane where the output or receiver waveguides 20 begin. When the input wavelength changes, the position of the image shifts along this plane. When the input wavelength equals one of the channel wavelengths (λ1, λ2,...,λn) the position of the image coincides with the corresponding output waveguide 20. This is shown in fig. 6 for a standard AWG. In this figure, the image (straight line) of the field profile of the input waveguide 12 moves from left to right for increasing input wavelength (fig. 6a through 6e). The field profiles of two output waveguides 20 are also shown (dashed lines). When the input wavelength equals one of the channel wavelengths, the image of the field profile of the input waveguide 12 overlaps with the field profile of one of the output waveguides 20 (fig. 6a and 6e). However, for a wavelength, just 25% of one channel spacing off from the channel wavelengths, the overlap is already reduced severely (fig. 6b and 6d).

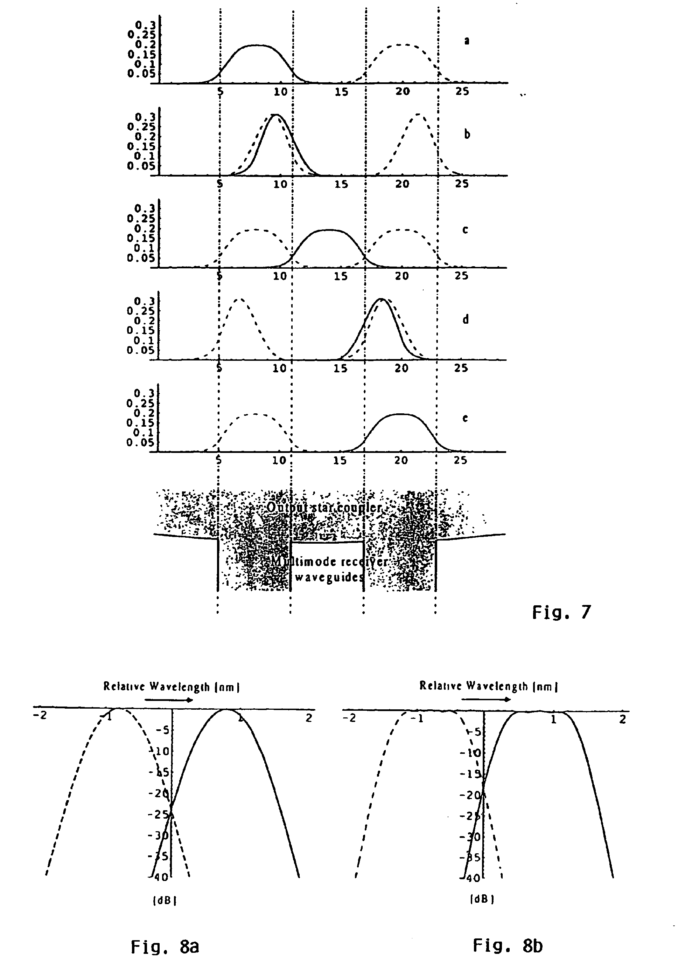

In **fig. 7**, comparable curves are shown for an improved AWG, where the above described dynamic field profiles have been used. At the channel wavelengths, there is again full overlap between the image of the transmitter waveguide 34 field profile and one of the receiver waveguide 20 field profiles (fig. 6a and 6e). However, for the receiver waveguides 20 (dashed lines), a dynamic field profile has been chosen where the field maximum moves to the right for a wavelength 25% above the channel wavelengths, whereas for the transmitter waveguide 34 (continuous line) a field profile has been chosen where the field maximum moves to the left relative to the focus position. Due to these two shifts, the overlap to the left receiver waveguide 20 is still high for an input wavelength which lies 25% of one channel spacing above the left channel wavelength (fig. 6b). This situation is mirrored for the wavelength 25% of one channel spacing below the right channel wavelength. Here the receiver mode maximum has moved to the right and the transmitter image maximum has moved to the left (fig. 6d), leading to an already high overlap to the right receiver channel for this wavelength.

**Fig. 8** shows the input to output waveguide transfer functions for a prior art (8a) and an inventional AWG arrangement (8b). From this comparison the overall result as depicted in **fig. 8** is appreciable as demonstrating a considerable broadening of the input to output waveguide transfer functions while retaining a better than -40 dB channel to channel crosstalk, as can be seen by comparing Figure 8a (prior art AWG) to Figure 8b (inventionally broadened AWG).

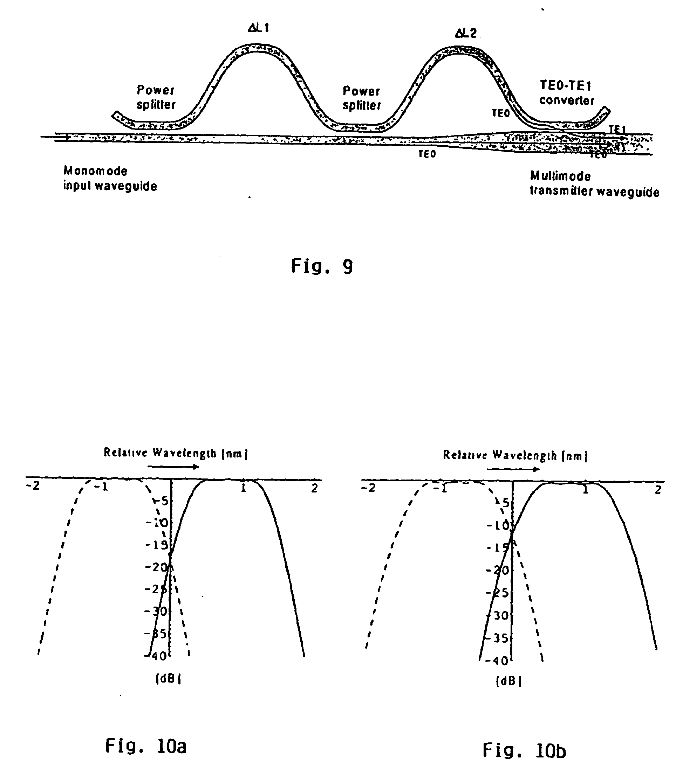

With reference to **figs. 9 and 10** a further specially preferred embodiment of an inventional AWG arrangement is described.

In the previously described broadened AWG design, converter units 32 were used at both the input and the output side of the AWG. This means that e.g. for an 1 to 8 AWG demultiplexer a total of 9 converter units are needed, e.g., 1 at the input, 8 at the outputs.

By using a more sophisticated inventional converter unit 32 design it is possible to achieve comparable results, i.e., about 0.5 dB loss, passband -1 dB with 55% of channel spacing, with a converter unit 32 at only one side. For the 1 to 8 AWG demultiplexer only 1 unit, at the input, is required.

An example of a converter unit 32 that could be used in this case is shown in figure 9. This converter unit again generates a superposition of a TE0 and a TE1 mode. However, in this case the power ratio between the two modes is made wavelength-dependent using a Mach Zehnder filter, consisting of the two power splitters linked by two waveguides with a length difference ΔL1.

The splitting constants of the power splitters and the length difference ΔL1 are chosen in such a way that the power ratio TE0/ TE1 is 0.25 / 0.75 for a wavelength halfway between two channel wavelengths, and the TE1 mode portion is 0 % while the TE0 mode portion is 100 % for the channel wavelengths.

The light from the lower output branch of the filter is coupled adiabatically to the TE0 mode of the multimode waveguide by a taper. The light from the upper branch is coupled to the TE1 mode of the multimode waveguide by a mode converter. The proper beating period between the two modes in the multimode transmitter waveguide 34 is determined by ΔL2.

In this embodiment directional couplers are used to implement the power splitters and mode converter. However, other implementations using e.g. y-splitters or MMIs are also possible.

With reference to **fig. 10** the results of this second aspect of providing variable power ratios are described as follows.

In fig. 10 the transfer functions of the two improved AWG designs are compared. The -1 dB passband width for both designs is comparable. However, the design using a variable power ratio has a slightly higher loss of about 0.5 dB and a slightly larger passband ripple of about 0.2 dB. Also the edges of the passband are less steep. These disadvantages are counterbalanced by the savings in space because only one variable power ratio converter unit 32 needs to be used in this example of a demultiplexer.

As should be noted supplementally, the disadvantage of these improved AWG designs described above lie in the extra space required by the converter unit(s) and in the fact that the wavelength dependency of the converter unit(s) 32 must match the wavelength dependency of the main AWG.

However, especially using the variable power ratio converter unit 32, the space required by the converter unit 32 will be small compared to the AWG itself. In the IBM SiON technology, for example, the wavelength matching can be realized conveniently using so-called heater tuning, as it has been demonstrated already in prior art IBM add-drop multiplexers in which the temperature dependence of the refraction index n(T) is used.

It should be noted that due to the ability of optical apparatuses to have a reciprocal, i.e., reversed functionality when they are arranged in a mirrored orientation, the inventional method and apparatus as described with reference to figs. 3 to 10 can be reversed such that they can be used in a mirrored arrangement for transforming multimode light into monomode light. This can be applied for providing e.g. a 8:1 multiplexer having one inventional converter unit at its output side.

In the foregoing specification the invention has been described with reference to a specific exemplary embodiment thereof. It will, however, be evident that various modifications and changes may be made thereto without departing from the broader scope of the invention as set forth in the appended claims. The specification and drawings are accordingly to be regarded as illustrative rather than in a restrictive sense.

The present invention reflects a general principle of AWG design. It can be realized basically in all common materials being adequate in waveguide fabricating technology as e.g., 3-5-semiconductor technology, SiO2 and others. It is thus not limited to SiON technology.

### 5. LIST OF REFERNCE SIGNS

| | |
|---|---|
| 10 | DEMUX |
| 12 | monomode input waveguides |
| 14 | input star coupler |
| 16 | input array |
| 18 | output star coupler |
| 20 | output waveguides = receiver waveguides |
| 30 | Inventional AWG design |
| 32 | converter unit |
| 34 | multimode transmitter waveguides |
| | |
| | |
| | |
| | |
| | |
| | |
| | |
| | |
| | |
| | |
| | |
| | |

## Claims

1. Method for broadening the passband of an arrayed waveguide grating arrangement, said method being **characterized by** the steps of
generating out of light from at least one monomode input waveguide (12) an intensity field profile with a controllable wavelength-dependent beating pattern in a multimode superposition transmitted in a respective number of multimode transmitter waveguides (34) being coupled to an input coupler (14) of the arrayed waveguide grating arrangement (30),
and controlling said wavelength-dependent beating pattern spatially for increasing the mode overlap in at least one monomode receiver waveguide (20) associated with an output of said apparatus by means of a converter unit (32) coupled between the at least one monomode input waveguide (12) and the associated multimode transmitter waveguide (34), said converter unit (32) including a power splitter and a mode converter being arranged to create a spatial shift in the position of the peak of said intensity field profile associated with a wavelength-dependent shift of the image of said intensity field profile by a controlled superposition of multiple modes in said multimode transmitter waveguides (34), said spatial shift in the position of said peak being effected by generating a wavelength-dependent phase shift between said multiple modes, which changes with an integer multiple of 2 π for a wavelength change of the size of a channel spacing.

2. The method according to claim 1, in which said step of generating an intensity field profile comprises the step of superpositioning said multiple modes with a predetermined power ratio and imposing a phase shift dependent on the wavelength, with a periodicity equal to the size of said channel spacing.

3. The method according to one of the preceding claims 1 to 4, wherein the steps of those claims are mirrored to transform said multimode superposition into monomode light associated with an output of said apparatus.

4. An optical apparatus usable to route optical wavelengths, comprising an arrayed waveguide grating arrangement which comprises
means (32) for generating out of light from at least one monomode input waveguide (12) an intensity field profile with a controllable wavelength-dependent beating pattern in a multimode superposition transmitted in a respective number of multimode transmitter waveguides (34) being coupled to an input coupler (14) of the arrayed waveguide grating arrangement, and
means (32) for controlling said wavelength-dependent beating pattern spatially for increasing the mode overlap in at least one monomode receiver waveguide (20) associated with an output of said apparatus,
said means (32) comprising a converter unit (32) coupled between the at least one monomode input waveguide (12) and the associated multimode transmitter waveguide, the converter unit (32) including a power splitter and a mode converter being arranged to create a spatial shift in the position of the peak of said intensity field profile associated with a wavelength-dependent shift of the image of said intensity field profile by a controlled superposition of multiple modes in said multimode transmitter waveguides (34), said spatial shift in the position of said peak being effected by generating a wavelength-dependent phase shift between said multiple modes, which changes with an integer multiple of 2 π for a wavelength change of the size of a channel spacing.

5. The apparatus according to the preceding claim 4, in which said means (32) for generating said controlled superposition of multiple modes in said multi-modal waveguide (34) comprises means for superimposing said multiple modes with a predetermined and imposing a phase shift dependent on the wavelength, with a periodicity equal to the size of said channel spacing.

6. The apparatus according to one of the preceding claims 4 or 5, wherein the apparatus configuration is mirrored such that said apparatus transforms said multimode superposition light into monomode light associated with an output of said apparatus.

7. A multiplexer used in optical networks in which the method according to one of the preceding claims 1 to 3 is applied to or comprises an apparatus according to one of the claims 4 to 6.

8. A demultiplexer used in optical networks in which the method according to one of the preceding claims 1 to 3 is applied to or comprises an apparatus according to one of the claims 4 to 6.

9. A M x N coupler connecting M input lines to N output lines and used in optical networks in which the method according to one of the preceding claims 1 to 3 is applied to or comprises an apparatus according to one of the claims 4 to 6.

## Patentansprüche

1. Verfahren zum Verbreitern eines Durchlassbandes einer matrixförmigen Wellenleitergitteranordnung, wobei das Verfahren durch die folgenden Schritte **gekennzeichnet** ist:
aus dem Licht aus mindestens einem Eingangs-Monomode-Wellenleiter (12) Erzeugen eines Feldintensitätsprofils mit einer steuerbaren wellenlängenabhängigen Schwebungsstruktur in einer Mehrmodenüberlagerung, die in einer entsprechenden Anzahl von Sende-Mehrmoden-Wellenleitern (34) übertragen wird, die mit einem Eingangskoppler (14) der matrixförmigen Wellenleitergitteranordnung (30) verbunden sind,
und räumliches Steuern der wellenlängenabhängigen Schwebungsstruktur zum Erhöhen der Modenüberlappung in mindestens einem Empfänger-Monomoden-Wellenleiter (20), der einem Ausgang der Vorrichtung unter Verwendung einer zwischen den mindestens einen Eingangs-Monomoden-Wellenleiter (12) und den zugeordneten Sender-Mehrmoden-Wellenleiter (34) geschalteten Umsetzereinheit (32) zugeordnet ist, wobei die Umsetzereinheit (32) einen Leistungsteiler und einen Modenumsetzer beinhaltet, der durch eine gesteuerte Überlagerung von mehreren Moden in den Sender-Mehrmoden-Wellenleitern (34) zum Erzeugen einer räumlichen Verschiebung der Lage des Peak des Feldintensitätsprofils eingerichtet ist, die einer wellenlängenabhängigen Verschiebung des Bildes des Feldintensitätsprofils zugeordnet ist, wobei die räumliche Verschiebung der Lage des Peak durch das Erzeugen einer wellenlängenabhängigen Phasenverschiebung zwischen den mehreren Moden bewirkt wird, die sich mit einem ganzzahligen Vielfachen von 2π für eine Wellenlängenänderung der Größe eines Kanalabstands ändert.

2. Verfahren nach Anspruch 1, bei dem der Schritt des Erzeugens eines Feldintensitätsprofils den Schritt des Überlagerns der mehreren Moden mit einem vorgegebenen Leistungsverhältnis und des Ausführens einer wellenlängenabhängigen Phasenverschiebung mit einer Periodizität umfasst, die gleich der Größe des Kanalabstands ist.

3. Verfahren nach einem der vorhergehenden Ansprüche 1 bis 4, bei dem die Schritte dieser Ansprüche so gespiegelt werden, dass sie die Überlagerung mehrerer Moden in Monomode-Licht umwandeln, das einem Ausgang der Vorrichtung zugewiesen wird.

4. Optische Vorrichtung, die zum Weiterleiten optischer Wellenlängen geeignet ist und eine matrixförmige Wellenleitergitteranordnung umfasst, die wiederum Folgendes umfasst:
ein Mittel (32), um aus dem Licht aus mindestens einem Eingangs-Monomode-Wellenleiter (12) ein Feldintensitätsprofil mit einer steuerbaren wellenlängenabhängigen Schwebungsstruktur in einer Mehrmodenüberlagerung zu erzeugen, die in einer entsprechenden Anzahl von Sende-Mehrmoden-Wellenleitern (34) übertragen wird, welche mit einem Eingangskoppler (14) der matrixförmigen Wellenleitergitteranordnung (30) verbunden sind, und
ein Mittel (32) zum räumlichen Steuern der wellenlängenabhängigen Schwebungsstruktur zum Erhöhen der Modenüberlappung in mindestens einem Empfänger-Monomoden-Wellenleiter (20), der einem Ausgang der Vorrichtung zugeordnet ist,
wobei das Mittel (32) eine zwischen den mindestens einen Eingangs-Monomode-Wellenleiter (12) und den zugeordneten Sender-Mehrmoden-Wellenleiter geschaltete Umsetzereinheit (32) umfasst, wobei die Umsetzereinheit (32) einen Leistungsteiler und einen Modenumsetzer beinhaltet, der durch eine gesteuerte Überlagerung von mehreren Moden in den Sender-Mehrmoden-Wellenleitern (34) zum Erzeugen einer räumlichen Verschiebung der Lage des Peak des Feldintensitätsprofils eingerichtet ist, die einer wellenlängenabhängigen Verschiebung des Bildes des Feldintensitätsprofils zugeordnet ist, wobei die räumliche Verschiebung der Lage des Peak durch das Erzeugen einer wellenlängenabhängigen Phasenverschiebung zwischen den mehreren Moden bewirkt wird, die sich mit einem ganzzahligen Vielfachen von 2π für eine Wellenlängenänderung der Größe eines Kanalabstands ändert.

5. Vorrichtung nach dem vorhergehenden Anspruch 4, bei der das Mittel (32) zum Erzeugen der gesteuerten Überlagerung mehrerer Moden in dem Mehrmoden-Wellenleiter (34) ein Mittel zum Überlagern der mehreren Moden mit einem vorgegebenen Leistungsverhältnis und zum Ausführen einer wellenlängenabhängigen Phasenverschiebung mit einer Periodizität umfasst, die gleich der Größe des Kanalabstands ist.

6. Vorrichtung nach einem der vorhergehenden Ansprüche 4 oder 5, bei dem die Anordnung der Vorrichtung so gespiegelt wird, dass die Vorrichtung die Überlagerung mehrerer Moden in Monomode-Licht umwandeln, das einem Ausgang der Vorrichtung zugewiesen wird.

7. Multiplexer, der in optischen Netzen verwendet wird, in welchen das Verfahren nach einem der vorhergehenden Ansprüche 1 bis 3 angewendet wird oder eine Vorrichtung nach einem der Ansprüche 4 bis 6 umfasst.

8. Demultiplexer, der in optischen Netzen verwendet wird, in welchen das Verfahren nach einem der vorhergehenden Ansprüche 1 bis 3 angewendet wird oder eine Vorrichtung nach einem der Ansprüche 4 bis 6 umfasst.

9. MxN-Koppler, der M Eingangsleitungen mit N Ausgangsleitungen verbindet und in optischen Netzen verwendet wird, in welchen das Verfahren nach einem der vorhergehenden Ansprüche 1 bis 3 angewendet wird oder eine Vorrichtung nach einem der Ansprüche 4 bis 6 umfasst.

## Revendications

1. Procédé pour élargir la bande passante d'un agencement en réseau de guides d'ondes groupés, ledit procédé étant **caractérisé par** les étapes consistant à :
générer, à partir de la lumière provenant d'au moins un guide d'ondes d'entrée (12) monomode, un profil de champ d'intensité ayant un motif de battement contrôlable, dépendant de la longueur d'onde, en une superposition multimode, transmise en un nombre respectif de guides d'onde de transmetteurs (34) multimodes, couplés à un coupleur d'entrée (14) de l'agencement en réseau de guides d'ondes groupés (30),
et à commander, spatialement, ledit motif de battement, dépendant de la longueur d'onde, pour augmenter le chevauchement de mode dans au moins un guide d'ondes de récepteur monomode (20) associé à un signal de sortie dudit appareil, au moyen d'une unité de convertisseur (32), couplée entre le au moins un guide d'ondes d'entrée (12) monomode et le guide d'onde de transmetteur (34) multimode associé, ladite unité de convertisseur (32) comprenant un diviseur de puissance et un convertisseur de mode, agencés pour créer un décalage spatial de la position du pic dudit profil de champ d'intensité, associé à un décalage, dépendant de la longueur d 'onde, de l'image dudit profil de champ d'intensité, par une superposition contrôlée de modes multiples dans lesdits guides d'onde de transmetteurs (34) multimodes, ledit décalage spatial de la position dudit pic étant effectué en générant un déphasage, dépendant de la longueur d'onde, entre ladite pluralité de modes, qui varie, avec un entier multiple de 2 π, pour un changement de longueur d'onde de la valeur de l'espacement entre les canaux.

2. Procédé selon la revendication 1, dans lequel ladite étape de génération d'un profil de champ d'intensité comprend l'étape de superposition de ladite pluralité de modes avec un rapport de puissance prédéterminé et d'imposition d'un déphasage dépendant de la longueur d'onde, avec une périodicité égale à la taille dudit espacement entre les canaux.

3. Procédé selon l'une des revendications 1 à 4 précédentes, dans lequel les étapes de ces revendications sont mises en miroir, de manière à transformer ladite superposition multimode en une lumière monomode, associée à un signal de sortie dudit appareil.

4. Appareil optique, utilisable pour acheminer des longueurs d'ondes optiques, comprenant un agencement en réseau de guides d'ondes groupés, qui comprend :
des moyens (32), pour générer, à partir de la lumière provenant d'au moins un guide d'ondes d'entrée (12) monomode, un profil de champ d'intensité ayant un motif de battement contrôlable, dépendant de la longueur d'onde, en une superposition multimode, transmise en un nombre respectif de guides d'onde de transmetteurs (34) multimodes, couplés à un coupleur d'entrée (14) de l'agencement en réseau de guides d'ondes groupés, et
des moyens (32), pour commander, spatialement, ledit motif de battement, dépendant de la longueur d'onde, pour augmenter le chevauchement de mode dans au moins un guide d'ondes de récepteur monomode (20) associé à un signal de sortie dudit appareil,
lesdits moyens comprenant une unité de convertisseur (32), couplée entre le au moins un guide d'ondes d'entrée (12) monomode et le guide d'onde de transmetteur (34) multimode associé, ladite unité de convertisseur (32) comprenant un diviseur de puissance et un convertisseur de mode, agencés pour créer un décalage spatial de la position du pic dudit profil de champ d'intensité, associé à un décalage, dépendant de la longueur d'onde, de l'image dudit profil de champ d'intensité, par une superposition contrôlée de modes multiples dans lesdits guides d'onde de transmetteurs (34) multimodes, ledit décalage spatial de la position dudit pic étant effectué en générant un déphasage, dépendant de la longueur d'onde, entre ladite pluralité de modes, qui varie, avec un entier multiple de 2 π, pour un changement de longueur d'onde de la valeur de l'espacement entre les canaux.

5. Appareil selon la revendication 4 précédente, dans lequel lesdits moyens (32), pour générer ladite superposition contrôlée de modes multiples dans ledit guide d'onde (34) multimode, comprend des moyens pour superposer ladite pluralité de modes avec un prédéterminé, et imposer un déphasage, dépendant de la longueur d'onde, avec une périodicité égale à la valeur de l'espacement entre les canaux.

6. Appareil selon l'une des revendications 4 ou 5 précédentes, dans lequel la configuration de l'appareil est mise en miroir, de manière que ledit appareil transforme ladite lumière à superposition multimode en de la lumière monomode, associée à un signal de sortie dudit appareil.

7. Multiplexeur, utilisé dans des réseaux optiques dans lesquels le procédé selon l'une des revendications 1 à 3 précédentes est appliqué, ou comprend un appareil selon l'une des revendications 4 à 6.

8. Démultiplexeur, utilisé dans des réseaux optiques dans lesquels le procédé selon l'une des revendications 1 à 3 précédentes est appliqué, ou comprend un appareil selon l'une des revendications 4 à 6.

9. Coupleur M x N, connectant M lignes d'entrées à N lignes de sortie et utilisé dans des réseaux optiques dans lesquels le procédé selon l'une des revendications 1 à 3 précédentes est appliqué, ou comprend un appareil selon l'une des revendications 4 à 6.
